# EUROPÄISCHE PATENTANMELDUNG

(11) **EP 2 090 449 A2**
(43) Veröffentlichungstag der Anmeldung: **19.08.2009**
(21) Anmeldenummer: 08021692.2
(22) Anmeldetag: 13.12.2008
(51) Int. Cl.: B60H 1/34

(54) **Fahrzeug mit einer Klima- bzw. Lüftungsanlage**

(30) Priorität: 12.02.2008 DE 102008008586
(71) Anmelder: Bayerische Motoren Werke Aktiengesellschaft, 80809 München (DE)
(72) Erfinder: Hörschler, Ingolf, Dr., 81475 München (DE); Munding, Peter, 80639 München (DE); Ziegel, Denis, 80687 München (DE)

(57) **Zusammenfassung**

Fahrzeug mit einer Klima- bzw. Lüftungsanlage, die ein Luftkanalsystem aufweist, aus dem Luft über eine Defrosterluftauslassöffnung (3) in einen Fahrgastraum strömen kann, wobei die Defrosterluftauslassöffnung in einem frontscheibennahen Bereich in eine Oberseite einer Instrumententafel (1) integriert und primär zur Beaufschlagung der Frontscheibe (2) mit Luft vorgesehen ist, wobei an der oder im Bereich der Defrosterluftauslassöffnung eine Verstelleinrichtung (5) vorgesehen ist. Die Verstelleinrichtung fungiert als Luftleiteinrichtung, nicht aber als Drossel- bzw. Absperreinrichtung. Die Defrosterluftauslassöffnung weist einen von der Stellung der Verstelleinrichtung unabhängigen, konstanten Luftaustrittsquerschnitt auf.

## Beschreibung

Die vorliegende Erfindung betrifft ein Fahrzeug mit einer Klima- bzw. Lüftungsanlage gemäß dem Oberbegriff des Patentanspruches 1.

Ein derartiges Fahrzeug ist aus der FR 2 873 628 A1 bekannt.

Fahrzeugklimaanlage weisen üblicherweise im frontscheibennahen Bereich der Oberseite der Instrumententafel mehrere sich schlitzartig über die Breite der Frontscheibe erstreckende Defrosterluftauslassöffnungen auf, die primär zur Beaufschlagung der Frontscheibe mit Luft und zur Vermeidung von Scheibenbeschlag vorgesehen sind. Bei manchen Fahrzeugen ist an der Oberseite der Instrumententafel zusätzlich ein sogenannter indirekter Ausströmer vorgesehen, der den Kopfbereich des Fahrgastraums möglichst zugfrei mit Luft versorgt. In der bereits erwähnten FR 2 873 628 A1 ist ein Luftauslass beschrieben, der eine um eine Fahrzeugquerachse verschwenkbare Lamelle aufweist. Je nach Stellung dieser Lamelle wird die ausströmende Luft primär zur Frontscheibe bzw. schräg nach hinten oben in den Kopfbereich des Fahrgastraums geleitet.

Grundsätzlich ist es denkbar, die Frontscheibe und den Kopfbereich des Fahrgastraums ausschließlich über ein bzw. mehrere Defrosterluftauslassöffnungen mit Luft zu versorgen. Für eine optimale Scheibendefrostung sollte sichergestellt werden können, dass die ausströmende Luft unmittelbar gegen die Frontscheibe strömt und ein Anlegen der Strömung an die Oberseite der Instrumententafel (Coanda-Effekt) möglichst vermieden wird. Für eine zugfreie Versorgung des Oberkörper- bzw. Kopfbereichs des Fahrgastraums hingegen ist der Coanda-Effekt, d.h. das Phänomen, dass Luft beim Austritt aus der Defrosterdüse umgelenkt wird und entlang der Oberseite der Instrumententafel strömt, durchaus wünschenswert.

Aufgabe der Erfindung ist es, ein Fahrzeug mit einer Klima- bzw. Lüftungsanlage zu schaffen, die so beschaffen ist, dass über die Defrosterluftauslässe sowohl eine optimale Scheibendefrostung als auch eine gute Versorgung des Oberkörper- bzw. Kopfbereichs des Fahrgastraums ermöglicht wird.

Diese Aufgabe wird durch die Merkmale des Patentanspruches 1 gelöst. Vorteilhafte Ausgestaltungen und Weiterbildungen der Erfindung sind den Unteransprüchen zu entnehmen.

Ausgangspunkt der Erfindung ist ein Fahrzeug mit einer Klima- bzw. Lüftungsanlage, die ein Luftkanalsystem aufweist, aus dem Luft über mindestens eine Defrosterluftauslassöffnung in einen Fahrgastraum strömen kann. Die mindestens eine Defrosterluftauslassöffnung ist in einem frontscheibennahen Bereich in eine Oberseite der Instrumententafel integriert und primär zur Beaufschlagung der Frontscheibe mit Luft vorgesehen. An der Defrosterluftauslassöffnung oder im Bereich der Defrosterluftauslassöffnung ist ferner eine Verstelleinrichtung vorgesehen.

Der Kern der Erfindung besteht darin, dass die Verstelleinrichtung als Luftleiteinrichtung, nicht aber als Drossel- bzw. Absperreinrichtung für die Defrosterluftauslassöffnung fungiert und somit die Defrosterluftauslassöffnung einen von der Stellung der Verstelleinrichtung unabhängigen, konstanten Luftaustrittsquerschnitt aufweist. Je nach Stellung der Verstelleinrichtung kann ein mehr oder weniger scharfkantiger Übergang zwischen der Defrosterluftauslassöffnung und der Oberseite der Instrumententafel dargestellt werden. Bei einem scharfkantigen Übergang wird die über die Defrosterluftauslassöffnung ausströmende Luft primär gegen die Frontscheibe geleitet (Ablösung der Strömung von der Instrumententafel) und ein "Abströmen" von Luft über die Oberseite der Instrumententafel (Coanda-Effekt) weitgehend vermieden. In Betriebszuständen, in denen es primär um eine Versorgung des Oberkörper- bzw. Kopfbereichs des Fahrgastraums mit Luft geht, wird eine Stellung der Verstelleinrichtung eingestellt, bei der gerade kein scharfkantiger Übergang zwischen der Defrosterluftauslassöffnung und der Oberseite der Instrumententafel vorhanden ist und somit der Coanda-Effekt zum Tragen kommt und Luft von der Defrosterluftauslassöffnung über die Oberseite der Instrumententafel abströmt, d.h. die Strömung liegt an der Instrumententafel an.

Bei einer ersten Ausführungsform der Erfindung weist die Verstelleinrichtung mindestens ein klappenartiges Element auf, das um eine quer zur Fahrzeuglängsrichtung verlaufende Schwenkachse schwenkbar ist. Das klappenartige Element ist nur in einem Schwenkwinkelbereich verschwenkbar, der den Luftaustrittsquerschnitt nicht überdeckt, so dass der Luftvolumenstrom, der über die Defrosterluftauslassöffnung austritt, durch die Verstelleinrichtung nicht beeinflusst wird.

Nach einer Weiterbildung der Erfindung ist das klappenartige Element an einem der Frontscheibe abgewandten Rand der Defrosterluftauslassöffnung angeordnet.

Bei einer anderen Ausführungsform der Erfindung weist die Verstelleinrichtung ein verschieblich angeordnetes, plattenartiges Element auf, das im Wesentlichen senkrecht nach oben aus der Instrumententafel ausfahrbar ist und im ausgefahrenen Zustand eine Strömungsabrisskante bildet, welche den Coanda-Effekt, d.h. ein Abströmen von Luft von der Defrosterluftauslassöffnung über die Oberseite der Instrumententafel weitgehend vermeidet.

Bei einer dritten Ausführungsform der Erfindung ist die Verstelleinrichtung ganz oder zum Teil durch einen oberen Bereich der Instrumententafel gebildet, der ein Stück weit nach oben in Richtung der Frontscheibe ausgefahren werden kann. Eine der Frontscheibe zugewandte Stirnseite dieses Bereichs der Instrumententafel dient für den Betriebszustand "maximale Scheibendefrostung" als Strömungsabrisskante.

Im Folgenden wird die Erfindung im Zusammenhang mit der Zeichnung näher erläutert. Es zeigen:
- Figur 1: ein erstes Ausführungsbeispiel der Erfindung;
- Figur 2: ein zweites Ausführungsbeispiel gemäß der Erfindung; und
- Figur 3: ein drittes Ausführungsbeispiel gemäß der Erfindung.

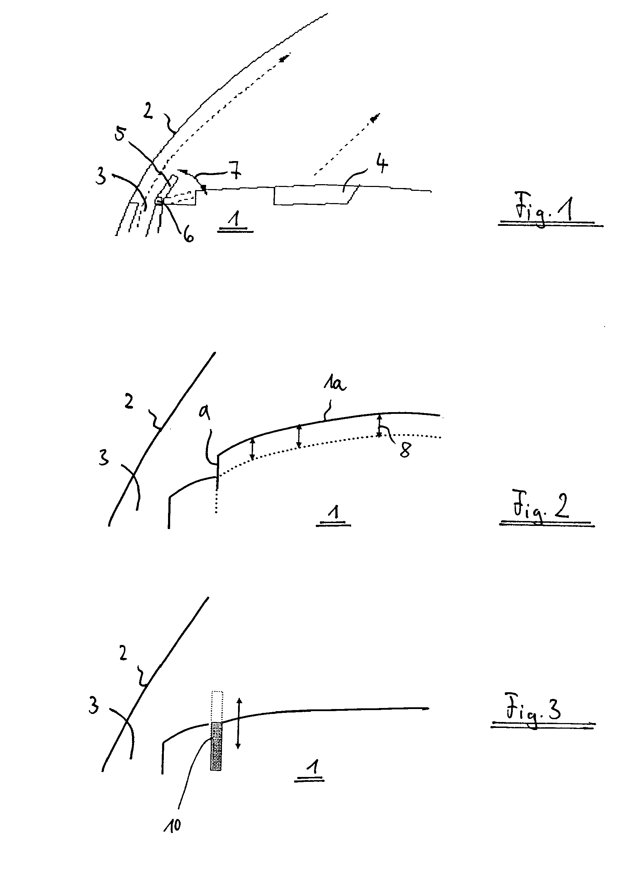

Figur 1 zeigt einen Querschnitt durch die Instrumententafel 1 eines Fahrzeugs. Im vorderen Bereich der Instrumententafel 1, d.h. in unmittelbarer Nähe zu einer Frontscheibe 2 des Fahrzeugs ist eine Defrosterluftauslassöffnung 3 vorgesehen. Die Defrosterluftauslassöffnung 3 ist somit in die Oberseite der Instrumententafel 1 integriert. In die Oberseite der Instrumententafel 1 ist ferner ein indirekter Luftausströmer 4 integriert, der aber nicht notwendigerweise vorhanden sein muss. An einem hinteren Rand des Defrosterluftauslasses 3 ist ein klappenartiges Luftleitelement 5 angeordnet, das um eine quer zur Fahrzeuglängsrichtung verlaufende Schwenkachse 6 schwenkbar ist. In der in Figur 1 gezeigten Stellung des klappenartigen Elements 5 wird nahezu der gesamte aus der Defrosterluftauslassöffnung 3 ausströmende Luftvolumenstrom entlang der Innenseite der Frontscheibe 2 schräg nach hinten oben geleitet. Ein Abströmen von Luft über die Oberseite der Instrumententafel 4 wird durch das als "Spoiler" bzw. "Luftabrisselement" wirkende klappenartige Element 5 verhindert.

Wie durch den Pfeil 7 angedeutet ist, kann das klappenartige Element 5 in die gestrichelt dargestellte Position nach hinten verschwenkt werden. In dieser Stellung des klappenartigen Elements kommt der aus der Physik bekannte Coanda-Effekt zum Tragen, d.h. es ist das Phänomen zu beobachten, dass ein Teil der aus der Defrosterluftauslassöffnung 3 ausströmenden Luft seitlich nach hinten über das klappenartige Element 5 und die sich daran anschließende Oberseite der Instrumententafel 1 in den Oberkörper- bzw. Kopfbereich des Fahrgastraums strömt und nur noch ein Teil des Gesamtvolumenstroms entlang der Innenseite der Frontscheibe 2 nach oben strömt.

Figur 2 zeigt ein Ausführungsbeispiel, bei dem ein Teilbereich 1 a der Oberseite der Instrumententafel 1 nach oben angehoben werden kann, was durch Pfeile 8 angedeutet ist. Eine der Frontscheibe 2 zugewandte Stirnseite 9 des Bereichs 1 a der Instrumententafel fungiert in der in Figur 2 gezeigten ausgefahrenen Stellung als "Strömungsabrisskante", wodurch sichergestellt ist, dass nahezu der gesamte Luftvolumenstrom, der aus der Defrosterluftauslassöffnung 3 ausströmt, nach oben zur Frontscheibe 2 und an der Innenseite der Frontscheibe 2 nach oben strömt. Der Coanda-Effekt wird somit "ausgeblendet", wenn der Bereich 1a der Instrumententafel 1 nach oben ausgefahren ist.

Figur 3 zeigt ein weiteres Ausführungsbeispiel, bei dem in der Instrumententafel 1 ein plattenartiges Element 10 integriert ist, das nach oben aus der Instrumententafel 1 ausgefahren werden kann. In dem in Figur 3 gezeigten eingefahrenen Zustand strömt aufgrund des Coanda-Effekts ein Teilvolumenstrom über die Oberseite der Instrumententafel 1 nach hinten in Richtung des Oberkörper- bzw. Kopfbereichs des Fahrgastraums ab.

## Patentansprüche

1. Fahrzeug mit einer Klima- bzw. Lüftungsanlage, die ein Luftkanalsystem aufweist, aus dem Luft über eine Defrosterluftauslassöffnung (3) in einen Fahrgastraum strömen kann, wobei die Defrosterluftauslassöffnung (3) in einem frontscheibennahen Bereich in eine Oberseite einer Instrumententafel (1) integriert und primär zur Beaufschlagung der Frontscheibe (2) mit Luft vorgesehen ist, wobei an der oder im Bereich der Defrosterluftauslassöffnung (3) eine Verstelleinrichtung (5, 1a, 10) vorgesehen ist,
**dadurch gekennzeichnet, dass** die Verstelleinrichtung (5, 1 a, 10) als Luftleiteinrichtung, nicht aber als Drossel- bzw. Absperreinrichtung fungiert, und die Defrosterluftauslassöffnung (3) einen von der Stellung der Verstelleinrichtung (5, 1 a, 10) unabhängigen, konstanten Luftaustrittsquerschnitt aufweist.

2. Fahrzeug nach Anspruch 1,
**dadurch gekennzeichnet, dass** die Verstelleinrichtung mindestens ein klappenartiges Element (5) aufweist, das um eine quer zur Fahrzeuglängsrichtung verlaufende Schwenkachse (6) schwenkbar ist, wobei das klappenartige Element (5) nur in einem Schwenkwinkelbereich verschwenkbar ist, der den Luftaustrittsquerschnitt der Defrosterluftauslassöffnung (3) nicht überdeckt.

3. Fahrzeug nach Anspruch 2,
**dadurch gekennzeichnet, dass** das klappenartige Element (5) an einem der Frontscheibe abgewandten Rand der Defrosterluftauslassöffnung (3) angeordnet ist.

4. Fahrzeug nach einem der Ansprüche 1 bis 3,
**dadurch gekennzeichnet, dass** die Verstelleinrichtung ein verschieblich angeordnetes plattenartiges Element (10) aufweist, das im Wesentlichen senkrecht nach oben aus der Instrumententafel (1) ausfahrbar ist.

5. Fahrzeug nach Anspruch 4,
**dadurch gekennzeichnet, dass** die Defrosterluftauslassöffnung (3) zwischen der Frontscheibe (2) und dem plattenartigen Element (10) angeordnet ist.

6. Fahrzeug nach einem der Ansprüche 1 bis 5,
**dadurch gekennzeichnet, dass** die Verstelleinrichtung zumindest zum Teil durch einen oberen Bereich (1 a) der Instrumententafel (1) gebildet ist, der ein Stück weit nach oben in Richtung der Frontscheibe (2) ausfahrbar ist, wobei eine der Frontscheibe (2) zugewandte Stirnseite (9) dieses Bereichs (1a) der Instrumententafel (1) als Strömungsabrisskante fungiert.
